# EUROPEAN PATENT APPLICATION

(11) **EP 4 257 267 A1**
(43) Date of publication of application: **11.10.2023**
(21) Application number: 21900577.4
(22) Date of filing: 30.11.2021
(51) Int. Cl.: B22F 1/14, B22F 1/17, C23C 10/50

(54) **METHOD FOR PRODUCING ALUMINUM-CONTAINING PARTICLES**

(30) Priority: 04.12.2020 JP 2020202260
(71) Applicant: AGC Inc., Chiyoda-ku Tokyo 100-8405 (JP); Nihon Calorizing Co., Ltd., Konan-shi, Shiga 520-3213 (JP)
(72) Inventor: ISHIKAWA, Yasunari, Tokyo 100-8405 (JP); FURUTA, Kazuhisa, Konan-shi, Shiga 520-3213 (JP)
(74) Representative: Müller-Boré & Partner Patentanwälte PartG mbB
(86) International application number: PCT/JP2021/043768
(87) International publication number: WO 2022/118824

(57) **Abstract**

A method for producing aluminum-containing particles includes:
mixing together treatment-target particles, an aluminum source, an activating agent, and a plurality of sintering inhibitors, thereby obtaining mixed particles, the treatment-target particles containing a heavy metal with a relative density of 4 or more and the activating agent containing a halide;
heating the mixed particles to perform calorizing treatment on the treatment-target particles using gaps formed by the plurality of sintering inhibitors, thereby obtaining a treated mixture containing aluminum-impregnated particles, the gaps being between adjacent sintering inhibitors of the plurality of sintering inhibitors; and
removing the plurality of sintering inhibitors from the treated mixture, thereby recovering the aluminum-impregnated particles.

## Description

### TECHNICAL FIELD

The disclosures herein relate to method for producing aluminum-containing particles.

### BACKGROUND ART

Aluminum-containing particles have excellent oxidation resistance at high temperatures and may be applied to various applications.

For example, Patent Document 1 discloses a technique of forming a film of an iron-aluminum intermetallic compound on a surface of stainless steel by performing atmospheric plasma spraying using particles containing an iron-aluminum intermetallic compound phase as a raw material for the spraying.

### RELATED-ART DOCUMENTS

### PATENT DOCUMENTS

Patent Document 1: WO2018/116856

### SUMMARY OF THE INVENTION

### PROBLEM TO BE SOLVED BY THE INVENTION

The particles in Patent Document 1 are prepared by firing a mixed power containing both an iron-aluminum intermetallic compound powder and an iron-containing powder at a high temperature.

However, it has been observed by inventors of the present disclosure that a region, in which aluminum is absent, exists on the surface of the particles that are prepared by using this method. Particles having such a surface region in which aluminum is absent can result in instances where the desired characteristics cannot be attained.

The present disclosure has been made in view of the above-described problem and has an object to provide a method for producing particles containing aluminum along the entirety of the surface thereof.

### MEANS TO SOLVE THE PROBLEM

According to an aspect of the present disclosure, provided is a method for producing aluminum-containing particles, the method including:
mixing together treatment-target particles, an aluminum source, an activating agent, and a plurality of sintering inhibitors, thereby obtaining mixed particles, the treatment-target particles containing a heavy metal with a relative density of 4 or more and the activating agent containing a halide;
heating the mixed particles to perform calorizing treatment on the treatment-target particles using gaps formed by the plurality of sintering inhibitors, thereby obtaining a treated mixture containing aluminum-impregnated particles, the gaps being between adjacent sintering inhibitors of the plurality of sintering inhibitors; and
removing the plurality of sintering inhibitors from the treated mixture, thereby recovering the aluminum-impregnated particles.

### EFFECTS OF THE INVENTION

According to one aspect of the present disclosure, a method for producing particles impregnated with aluminum along the entirety of the surface thereof can be provided.

### BRIEF DESCRIPTION OF THE DRAWINGS

[FIG. 1] FIG. 1 illustrates a schematic diagram of an example of a flow of a method for producing particles according to an embodiment of the present disclosure;
[FIG. 2] FIG. 2 illustrates a schematic diagram of a state of mixed particles after a reaction vessel is filled with the mixed particles;
[FIG. 3] FIG. 3 is a diagram illustrating (a) a cross-section of a spherical particle obtained in the embodiment of the present disclosure and illustrating (b) a distribution of aluminum contained in the cross section obtained in the embodiment of the present disclosure;
[FIG. 4] FIG. 4 is a diagram illustrating (a) a cross section of a spherical particle obtained in another embodiment of the present disclosure and illustrating (b) a distribution of aluminum contained in the cross section obtained in the another embodiment of the present disclosure;
[FIG. 5] FIG. 5 is a diagram illustrating (a) a cross section of a spherical particle obtained in yet another embodiment of the present disclosure and illustrating (b) a distribution of aluminum contained in the cross section obtained in the yet another embodiment of the present disclosure;
[FIG. 6] FIG. 6 is a diagram illustrating (a) a cross section of a spherical particle obtained in even yet another embodiment of the present disclosure and illustrating (b) a distribution of aluminum contained in the cross section obtained in the even yet another embodiment of the present disclosure;
[FIG. 7] FIG. 7 is a diagram illustrating (a) a cross section of a spherical particle obtained in even yet another embodiment of the present disclosure and illustrating (b) a distribution of aluminum contained in the cross section obtained in this even yet another embodiment of the present disclosure;
[FIG. 8] FIG. 8 is a diagram illustrating (a) a cross section of a spherical particle obtained in even yet another embodiment of the present disclosure and illustrating (b) a distribution of aluminum contained in the cross section obtained in this even yet another embodiment of the present disclosure; and
[FIG. 9] FIG. 9 is a diagram illustrating (a) a cross section of a spherical particle obtained in even yet another embodiment of the present disclosure and illustrating (b) a distribution of aluminum contained in the cross section obtained in this even yet another embodiment of the present disclosure.

### MODE FOR CARRYING OUT THE INVENTION

Next, one embodiment of the present disclosure is described below.

As described above, there may be regions in which aluminum is absent on the surface of the particles in Patent Document 1. A situation can arise where desired characteristics cannot be attained with particles containing surface regions where such aluminum is not present.

One conceivable way to address the problem of aluminum deficiency on such a surfaces is to perform calorizing treatment on the treatment-target particles.

Calorizing treatment is a technique in which aluminum diffuses and impregnates the surface of a plate-shaped or block-shaped treatment-target object (i.e., to-be-treated object) at high temperatures. For example, in a case where the object contains iron, a uniform iron-aluminum alloy can be formed on the surface of the object after calorizing treatment.

However, when calorizing treatment is applied to a treatment-target object containing a trace amount of oxygen, a reduction of oxides in the treatment-target object and the oxidation of aluminum in the treatment-target object occur, resulting in a solid-state contact reaction (thermite reaction) with large heat generation. When a thermite reaction occurs, heat causes the reaction to progress rapidly, so there is no time for heat to dissipate to the outside, and as a result of the accumulation of heat, the reaction system reaches temperatures as high as several thousand degrees Celsius.

Therefore, when a thermite reaction occurs in a case where the treatment-target object is in the form of a particle, the treatment environment becomes extremely hot, and the compound after treatment (hereinafter referred to as "treated mixture") disadvantageously becomes a solid-mass form in which all adjacent particles are firmly stuck to each other.

Also, once such a solid mass-shaped treated mixture is produced, the sintering inhibitors can no longer be separated from the treated mixture. Consequently, there is a problem in that the calorizing-treated particles (hereinafter also referred to as "aluminum-impregnated particles") cannot be recovered from the treated mixture.

In contrast, in an embodiment of the present disclosure, provided is a method for producing aluminum-containing particles, by:
mixing together treatment-target particles, an aluminum source, an activating agent, and a plurality of sintering inhibitors, thereby obtaining mixed particles, the treatment-target particles containing a heavy metal with a relative density of 4 or more and the activating agent containing a halide;
heating the mixed particles to perform calorizing treatment on the treatment-target particles using gaps formed by the plurality of sintering inhibitors, thereby obtaining a treated mixture containing aluminum-impregnated particles, the gaps being between adjacent sintering inhibitors of the plurality of sintering inhibitors; and
removing the plurality of sintering inhibitors from the treated mixture, thereby recovering the aluminum-impregnated particles.

Here, "heavy metal with a relative density of 4 or more" includes iron, chromium, nickel, molybdenum, bismuth, tungsten, cobalt, zirconium, manganese, copper, and the like.

The "treatment-target particles" are not limited to single metals, and may be alloys containing the above elements.

In the method according to the embodiment of the present disclosure, aluminum impregnation treatment is performed on the treatment-target particles by using the calorizing treatment. Further, in the method according to the embodiment of the present disclosure, the calorizing treatment is performed using the gaps formed between the sintering inhibitors.

With such features, the method in accordance with the embodiment of the present disclosure can significantly reduce the possibility of the treatment-target particles sticking to either or both of the sintering inhibitors and other treatment-target particles even if the thermite reaction occurs in the reaction system. This is because the above-mentioned gaps serve to provide numerous "small compartments" for reactions separated from each other.

As a result, the treated mixture produced after the calorizing treatment is not in a form where the entirety is aggregated into a solid mass, but instead is in a state where the aluminum-impregnated particles and the sintering inhibitors are separated from each other. Therefore, in the method according to the embodiment of the present disclosure, the sintering inhibitors can be removed from the treated mixture after the calorizing treatment with relative ease. In addition, this enables the separation and recovery of aluminum-impregnated particles with relative ease.

Thus, in the method according to the embodiment of the present disclosure, the treatment-target particles can be properly calorized and the particles containing aluminum along the entirety of the surface thereof can be properly produced.

(Method for producing particles according to the embodiment of the present disclosure)

Next, a method for producing particles according to the embodiment of the present disclosure is described with reference to the drawings.

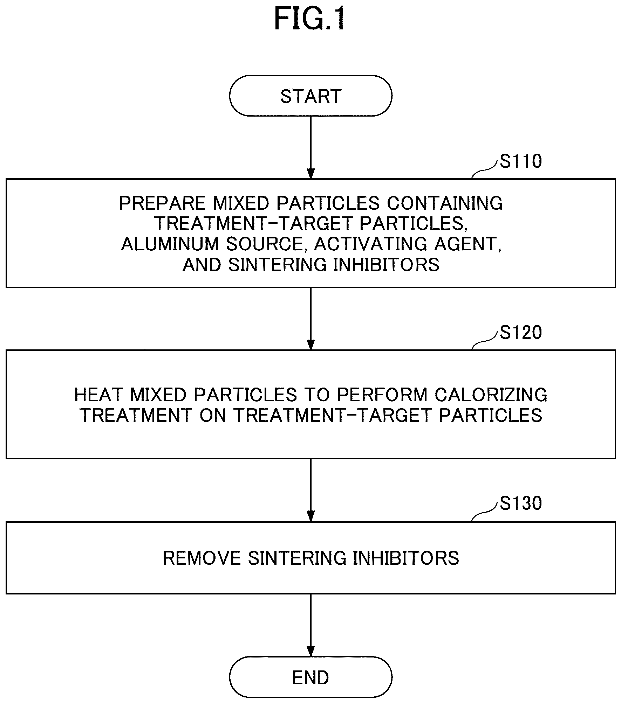

FIG. 1 illustrates a schematic diagram of an example of a flow of a method for producing particles according to an embodiment of the present disclosure.

As illustrated in FIG. 1, a method for producing particles according to the embodiment of the present disclosure (hereinafter, referred to as a "first production method") includes:
a step of preparing mixed particles containing treatment-target particles, an aluminum source, an activating agent, and sintering inhibitors (S110);
a step of heating the mixed particles to perform calorizing treatment for the treatment-target particles (S120); and
a step of removing the sintering inhibitors (S130).

Next, each step is described in greater detail.

### (Step S110)

First, mixed particles are prepared.

The mixed particles include treatment-target particles, an aluminum source, an activating agent, and sintering inhibitors. Each of the particles is described below.

### (Treatment-target particles)

The treatment-target particles, as described above, contain a heavy metal with a relative density of 4 or more. The heavy metal may include at least one element selected from, for example, iron, chromium, nickel, molybdenum, bismuth, tungsten, cobalt, zirconium, manganese, and copper.

The "treatment-target particles" are not limited to single metals, and may be an alloy containing the above elements. For example, the treatment-target particles may be stainless steel particles or iron-aluminum alloy particles.

In addition, the treatment-target particles may contain inevitable impurities in addition to the heavy metals with a relative density of 4 or more. The inevitable impurities include, for example, phosphorus, sulfur, and carbon.

In the following description, for the sake of clarity, the first manufacturing method is described using a case where the treatment-target particles are iron (including inevitable impurities). In this case, examples of the inevitable impurities include manganese, phosphorus, sulfur, and carbon.

An average particle size of the treatment-target particles is selected so as to be smaller than an average particle size of the sintering inhibitors described further below. For example, the maximum particle size of the treatment-target particles may be 0.29 times or less the average particle size of the sintering inhibitors.

The particle size of the treatment-target particles may be, for example, in a range of 10 µm to 600 µm.

In the present application, the "average particle size" is measured using the method specified in Industrial Japanese Standard JIS Z 8801.

That is, sieves having different mesh sizes are stacked in several stages in an order from a small mesh size, and particles to be measured are vibrated at a constant amplitude for a constant time, so that the particles are sieved. Next, a weight of particles remaining on each sieve is measured, and the particle size distribution of the weight of particles is graphed. A particle size corresponding to a cumulative value of 50% in the obtained particle size distribution is defined as an "average particle size".

It is to be noted that the particle size of the treatment-target particles was represented by a range including a minimum value and a maximum value.

### (Aluminum source)

The aluminum source may be aluminum metal particles or aluminum alloy particles.

The average particle size of the aluminum source is selected so as to be significantly smaller than the average particle size of the sintering inhibitors. For example, the average particle size of the aluminum source may be 0.29 times or less the average particle size of the sintering inhibitors.

The average particle size of the aluminum source may be, for example, in the range of 10 um to 600 µm.

The average particle size of the aluminum source is preferably smaller than the average particle size of the treatment-target particles.

### (Activating agent)

The activating agent has a role of promoting the calorizing treatment by forming a vapor of a metal halide during the calorizing treatment of the treatment-target particles.

The activating agent includes, for example, ammonium chloride, iron chloride, aluminum chloride, iron fluoride, aluminum fluoride, or any combination thereof. The activating agent is added, for example, in a range of 0.1 wt% to 2 wt% with respect to the entirety of the mixed particles.

### (Sintering inhibitors)

The sintering inhibitors may include at alumina, kaolin, silicon oxide, or any combination thereof.

The sintering inhibitors may have, for example, at least one shape selected from the group consisting of a spherical shape, a triangular pyramid shape, a triangular prism shape, a tetrahedral shape, a conical shape, and a cylindrical shape.

It is to be noted that the sintering inhibitors have a sufficiently larger average particle size than that of the treatment-target particles and that of the aluminum source. For example, the average particle size of the sintering inhibitors is selected to be at least 3.4 times the maximum particle size of the treatment-target particles and the average particle size of the aluminum source.

The average particle size of the sintering inhibitors may be in a range of 500 µm to 5,000 µm.

### (Mixed particles)

Mixed particles are prepared by mixing the above-mentioned components.

The amount, i.e., content, of the treatment-target particles contained in the entirety of the mixed particles is, for example, in a range of 10 wt% to 40 wt%. The amount of the aluminum source contained in the entirety of the mixed particles is, for example, in a range of 2 wt% to 20 wt%. The amount of the sintering inhibitors contained in the entirety of the mixed particles is, for example, in a range of 40 wt% to 80 wt%.

### (Step S120)

Next, the mixed particles prepared in step S110 are subjected to heat treatment. Therefore, a reaction vessel may be filled with the mixed particles.

By heating the reaction vessel, treatment-target particles are subjected to the calorizing treatment. That is, aluminum generated from the aluminum source diffuses and impregnates into the treatment-target particles, thereby forming aluminum-impregnated particles.

Here, the greater the difference in the ionization tendency between the treatment-target agent and the aluminum source that are contained in the mixed particles, the greater the amount of heat generated by the thermite reaction between the mixed particles when the reaction vessel is heated. This is because the aluminum reacts with the trace amount of oxygen contained in the treatment-target particles to reduce the treatment-target particles.

When such a thermite reaction occurs, the temperature in the reaction vessel becomes extremely high, and the mixture after the treatment, that is, the "treated mixture" becomes a solid mass in which all the particles are firmly stuck to each other. In addition, there is a problem that once such a solid mass treated mixture is formed, the sintering inhibitors cannot be separated from the treated mixture thereafter.

In contrast to this, in the first production method, it is possible to significantly suppress formation of a solid mass mixture.

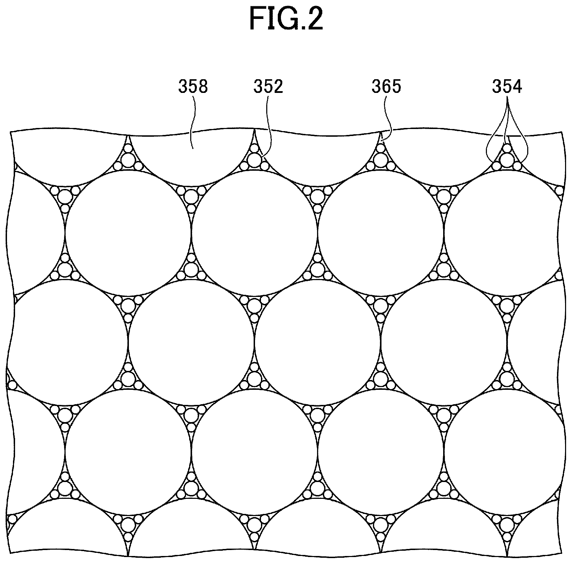

In the following, this feature is described with reference to FIG. 2.

FIG. 2 illustrates a schematic diagram of a state of mixed particles after a reaction vessel is filled with the mixed particles. As illustrated in FIG. 2, the reaction vessel is filled with the treatment-target particles 352, an aluminum source 354, the activating agent, and sintering inhibitors 358 that are components of the mixed particles.

In FIG. 2, the activating agent is omitted. In addition, each component of the mixed particles is assumed to be spherical here.

Here, in a case where the size (represented by ø_{S}) of the sintering inhibitors 358 is sufficiently larger than the size (represented by ø_{Fe}) of the treatment-target particle 352 and the size (represented by ø_{Al}) of the aluminum source 354, a gap 365 is formed between the adjacent sintering inhibitors 358. In addition, the treatment-target particles 352 and the aluminum source 354 are disposed in the gap 365 formed by the sintering inhibitors 358.

When the reaction vessel is heated in a state where the mixed particles are arranged as described above, the possibility of the treatment-target particles 352 sticking to either or both of the sintering inhibitors 358 and the other treatment-target particles 352 can be significantly reduced, even if a thermite reaction occurs in the reaction vessel. This is because the gaps 365 serve to provide numerous "small compartments" that are for reactions for the calorizing treatment.

As a result, the treated mixture generated after the heat treatment does not have a form in which the entirety of the treated mixture is aggregated in a solid-mass form, but instead has a state in which the aluminum-impregnated particles and the sintering inhibitors 358 are separated from each other. Thus, the aluminum-impregnated particles can be removed from the treated mixture in a subsequent step.

Table 1 below illustrates examples in which reaction vessels are filled with the mixed particles capable of exhibiting the above-described effect.

Here, it is assumed that the treatment-target particles 352 are spherical iron particles (density of 7.87 g/cm³), the aluminum source 354 is spherical aluminum particles (density of 2.70 g/cm³), the activating agent is spherical ammoniumchloride particles (density of 1.527 g/cm³), and the sintering inhibitors 358 are spherical alumina (density of 4.00 g/cm³).

In addition, it is assumed that the average particle size ø_{S} of the sintering inhibitors 358 is 1,000 µm, the particle size ø_{Fe} of the treatment-target particles 352 is 38 um to 75 um, the average particle size ø_{Al} of the aluminum source 354 is 50 um, and the average particle size of the activating agent is 10 um.

**[TABLE 1]**

| Filling rate by sintering inhibitors [%] | | | | 74 | |
|---|---|---|---|---|---|
| Filling rate of gaps generated by sintering inhibitors [%] | | | | 100 | 85 |
| Component | Material | Density [g/cm³] | Average particle size [µm] | Weight [kg] | Weight [kg] |
| Sintering inhibitors | Al₂O₃ | 4 | 1000 | 10 | 10 |
| Treatment-target particles | Fe | 7.87 | (38-75) * | 2.216 | 1.879 |
| Aluminum source | Al | 2.7 | 50 | 1.491 | 1.253 |
| Activating agent | NH₄Cl | 1.527 | 10 | 0.067 | 0.066 |

| | | | | | |
|---|---|---|---|---|---|
| * represented by range including the minimum value and maximum value | | | | | |

According to Table 1, when 10 kg of the sintering inhibitors 358 is added at the maximum filling rate, i.e., closest packed, 74% of the total space volume is occupied by the sintering inhibitors 358. Therefore, the gaps 365 is 26%.

When the entirety (100%) of the gaps 365 is filled with the treatment-target particles 352, the aluminum source 354, and the activating agent, an amount of the treatment-target particles 352 is 2.216 kg, an amount of the aluminum source 354 is 1.491 kg, and an amount of the activating agent is 0.067 kg, as an example.

Similarly, when 85% of the gaps 365 is filled with the treatment-target particles 352, the aluminum source 354, and the activating agent, the amount of the treatment-target particles 352 can be calculated as 1.879 kg, the amount of the aluminum source 354 can be calculated as 1.253 kg, and the amount of the activating agent can be calculated as 0.066 kg.

In the above calculation, the Al/Fe ratio in the mixed particles is assumed to be 40/60 (weight ratio). The amount of the activating agent is also assumed to be 0.5 wt% of the entirety.

Even in the case where the sintering inhibitors 358 are added in a manner other than closest-packed, the amounts of the respective components can be calculated in substantially the same manner as above.

When the sintering inhibitors 358 have a spherical shape, the filling rate by the sintering inhibitors 358 is preferably in a range of 55% to 74% (when closest-packed) in order to obtain the above-described effect.

In addition, the filling rate of the gaps 365 generated by the sintering inhibitors 358 by the treatment-target particles 352, the aluminum source 354, and the activating agent is preferably in a range of 60% to 100%.

However, in practice, because a case where the sintering inhibitors 358 have a non-spherical shape is also assumed, the preferable range of the filling rate by the sintering inhibitors 358 is assumed to be 50% to 80%.

As described above, in the first production method, the calorizing treatment for the treatment-target particles 352 can be performed by using the gaps 365 formed between the sintering inhibitors 358.

The treatment atmosphere for the calorizing treatment may be an inert atmosphere not containing oxygen, for example, an argon gas atmosphere.

The treatment temperature is not particularly limited as long as diffusion and impregnation of aluminum into the treatment-target particles occurs. The treatment temperature may be, for example, in a range of 800°C to 1,100°C.

The treatment time is not particularly limited, and is, for example, in a range of 1 hour to 10 hours.

### (Step S130)

Next, the sintering inhibitors are removed from the powdery treated mixture formed in step S120. The sintering inhibitors may be removed, for example, by sieving the treated mixture using a sieve that allows only particles having small average particle sizes to pass.

As described above, in the first production method, an increase in the temperature of the reaction system due to accumulation of excessive heat which may be generated in the thermite reaction can be significantly suppressed.

Therefore, in the first production method, the sintering inhibitors and the aluminum-impregnated particles can be separated from each other with relative ease.

Through the above-described steps in the first manufacturing method, the particles containing aluminum along the entirety of the surface thereof can be properly produced.

### EXAMPLES

In the following, examples of the present disclosure are described. In the following description, Examples 1 to 7 are practical examples, whereas Example 11 is a comparative example.

### (Example 1)

Iron particles that were subjected to calorizing treatment were prepared by the method described below.

First, iron particles (10.96 wt%) as the treatment-target particles, aluminum particles (10.96 wt%) as the aluminum source, ammonium chloride particles (0.50 wt%) as the activating agent, and spherical alumina particles (77.58 wt%) as the sintering inhibitors were sufficiently mixed, to prepare mixed particles.

The iron particles had a particle size of 38 µm to 75 pm, the aluminum particles had an average particle size of 50 pm, the activating agent had a particle size of 10 µm, and the alumina particles had a particle size of 1,000 µm.

The mixed particles were filled in a heat-resistant vessel. In calculation, the filling rate by the alumina particles was 74%. The iron particles, the aluminum particles, and the ammonium chloride particles were filled so as to occupy 85% of gaps of the remaining 26%.

Next, the inside of the heat-resistant vessel was replaced with an argon atmosphere, and then the heat-resistant vessel was heated to 1,000°C. After maintaining the heat-resistant vessel at 1,000°C for 10 hours, the heat-resistant vessel was cooled in a furnace.

Thereafter, the treated mixture was taken out from the heat-resistant vessel and passed through a #32 mesh sieve to remove the alumina powder. Thus, spherical particles (hereinafter, referred to as "particles according to Example 1") were obtained.

### (Example 2)

Iron particles subjected to the calorizing treatment (hereinafter referred to as "particles according to Example 2") were prepared by the same method as in Example 1.

However, in Example 2, the content of the iron particles contained in the mixed particles was 13.20 wt%, the content of the aluminum particles was 9.96 wt%, the content of the ammonium chloride particles as the activating agent was 0.5 wt%, and the content of the spherical alumina particles as the sintering inhibitors was 76.34 wt%.

The other conditions such as the filling rate by the alumina particles were the same as in Example 1.

### (Example 3)

Iron particles subjected to the calorizing treatment (hereinafter referred to as "particles according to Example 3") were prepared by the same method as in Example 1.

However, in Example 3, the content of the iron particles contained in the mixed particles was 14.24 wt%, the content of the aluminum particles was 9.49 wt%, the content of the ammonium chloride particles as the activating agent was 0.5 wt%, and the content of the spherical alumina particles as the sintering inhibitors was 75.77 wt%.

The other conditions such as the filling rate by the alumina particles were the same as in Example 1.

### (Example 4)

Iron particles subjected to the calorizing treatment (hereinafter referred to as "particles according to Example 4") were prepared by the same method as in Example 1.

However, in Example 4, the content of the iron particles contained in the mixed particles was 15.71 wt%, the content of the aluminum particles was 8.83 wt%, the content of the ammonium chloride particles as the activating agent was 0.5 wt%, and the content of the spherical alumina particles as the sintering inhibitors was 74.96 wt%.

The other conditions such as the filling rate by the alumina particles were the same as in Example 1.

### (Example 5)

Iron particles subjected to the calorizing treatment (hereinafter referred to as "particles according to Example 5") were prepared by the same method as in Example 1.

However, in Example 5, the content of the iron particles contained in the mixed particles was 16.87 wt%, the content of the aluminum particles was 8.31 wt%, the content of the ammonium chloride particles as the activating agent was 0.5 wt%, and the content of the spherical alumina particles as the sintering inhibitors was 74.32 wt%.

The other conditions such as the filling rate by the alumina particles were the same as in Example 1.

### (Example 6)

Iron particles subjected to the calorizing treatment (hereinafter referred to as "particles according to Example 6") were prepared by the same method as in Example 1.

However, in Example 6, the content of the iron particles contained in the mixed particles was 17.69 wt%, the content of the aluminum particles was 7.95 wt%, the content of the ammonium chloride particles as the activating agent was 0.5 wt%, and the content of the spherical alumina particles as the sintering inhibitors was 73.87 wt%.

The other conditions such as the filling rate by the alumina particles were the same as in Example 1.

### (Example 7)

Iron particles subjected to the calorizing treatment (hereinafter referred to as "particles according to Example 7") were prepared by the same method as in Example 1.

However, in Example 7, the content of the iron particles contained in the mixed particles was 22.74 wt%, the content of the aluminum particles was 5.68 wt%, the content of the ammonium chloride particles as the activating agent was 0.5 wt%, and the content of the spherical alumina particles as the sintering inhibitors was 71.08 wt%.

The other conditions such as the filling rate by the alumina particles were the same as in Example 1.

### (Example 11)

Preparation of iron particles subjected to the calorizing treatment was attempted by the same method as in Example 1.

However, in Example 11, the average particle size of the iron particles contained in the mixed particles was 50 um, the average particle size of the aluminum particles was 50 um, and the average particle size of the alumina particles was 60 um. The content of the iron particles contained in the mixed particles was 56.00 wt%, the content of the aluminum particles was 24.00 wt%, the content of the ammonium chloride particles as the activating agent was 0.50 wt%, and the content of the alumina particles was 19.50 wt%.

The heating temperature was 1,000°C, and the heating time was 10 hours.

The treated mixture obtained after the heat treatment was a solid mass, and thus it was difficult to separate and remove the alumina particles.

The content and the particle size of each component contained in the mixed particles used in each example are summarized in Table 2.

**[TABLE 2]**

| Ex. | Iron particle | | Aluminum particle | | Activating agent | | Alumina particle | |
|---|---|---|---|---|---|---|---|---|
| | Particle size [µm] | Content [mass%] | Average particle size [µm] | Content [mass%] | Average particle size [µm] | Content [mass%] | Average particle size [µm] | Content [mass%] |
| 1 | 38-75 | 10.96 | 50 | 10.96 | 10 | 0.5 | 1000 | 77.58 |
| 2 | 38-75 | 13.20 | 50 | 9.96 | 10 | 0.5 | 1000 | 76.34 |
| 3 | 38-75 | 14.24 | 50 | 9.49 | 10 | 0.5 | 1000 | 75.77 |
| 4 | 38-75 | 15.71 | 50 | 8.83 | 10 | 0.5 | 1000 | 74.96 |
| 5 | 38-75 | 16.87 | 50 | 8.31 | 10 | 0.5 | 1000 | 74.32 |
| 6 | 38-75 | 17.69 | 50 | 7.95 | 10 | 0.5 | 1000 | 73.86 |
| 7 | 38-75 | 22.74 | 50 | 5.68 | 10 | 0.5 | 1000 | 71.08 |
| 11 | 50 | 56 | 50 | 24 | 10 | 0.5 | 60 | 19.5 |

Table 1 summarizes the filling rate by the alumina particles and the filling rate of the gaps by the other components according to each example.

**[TABLE 3]**

| Example | Filling rate by alumina particle [%] | Filling rate of gaps [%] |
|---|---|---|
| 1 | 74 | 85 |
| 2 | 74 | 85 |
| 3 | 74 | 85 |
| 4 | 74 | 85 |
| 5 | 74 | 85 |
| 6 | 74 | 85 |
| 7 | 74 | 85 |
| 11 | - | - |

In Example 11, description of the filling rates was omitted because the particle size of the alumina particles was substantially the same as the particle sizes of the other components.

### (Evaluation)

The forms of the particles were observed for the particles that were used in each example.

### (Cross-sectional analysis)

Using the particles in each example, a cross-section observation sample was prepared by the following method.

First, multiple particles were embedded in the resin and then the resin was cured. Next, the resin was polished with abrasive paper and a buff polishing apparatus to expose a cross section of the particle.

The observation target was set to be spherical particles having the "maximum cross section". Here, the "maximum cross section" refers to a cross section passing through the center of the spherical particle. Therefore, the "maximum cross section" of the particle has substantially the same dimension as the diameter of the particle.

Hereinafter, the spherical particles according to Examples 1 to 7 serving as the observation targets are referred to as "Sample 1" to "Sample 7".

In Samples 1 to 7, cross sections of the particles of the spherical particles were observed with an SEM. Further, amounts of iron and aluminum contained in the cross sections of the spherical particles were evaluated by EDX analysis.

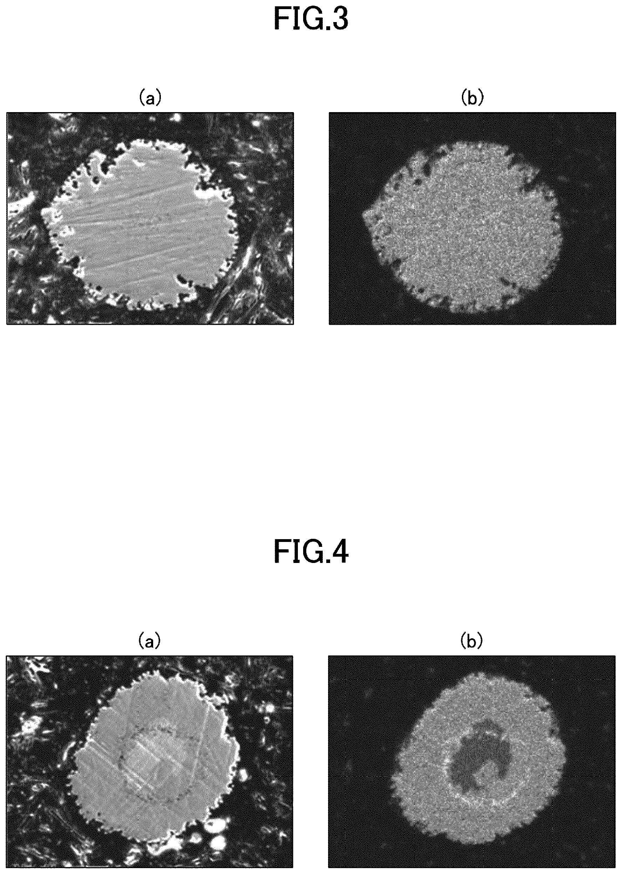

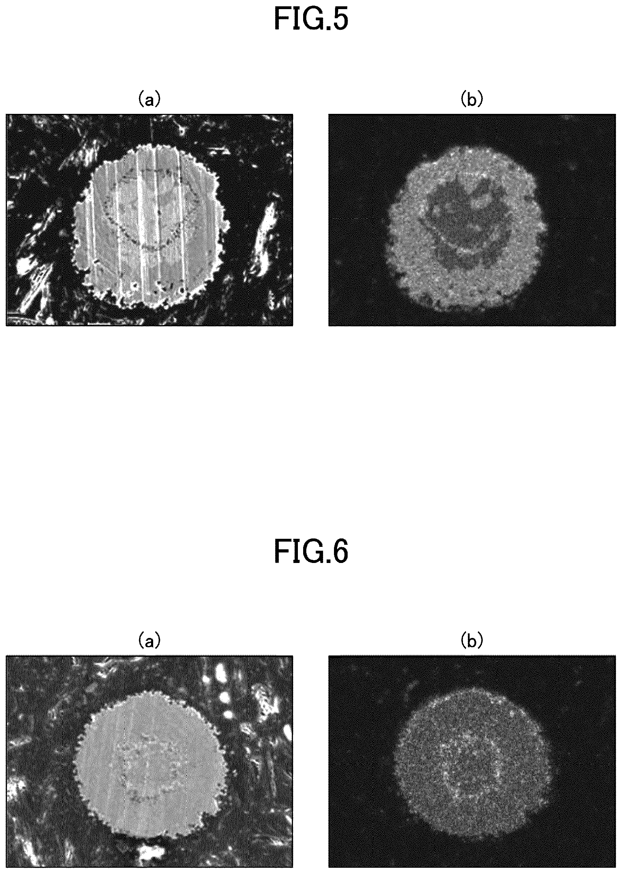

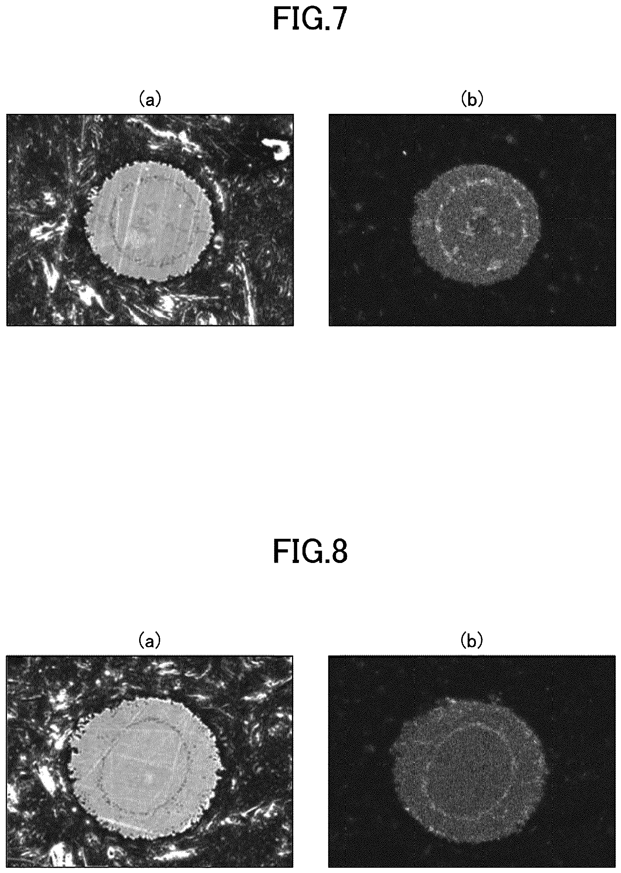

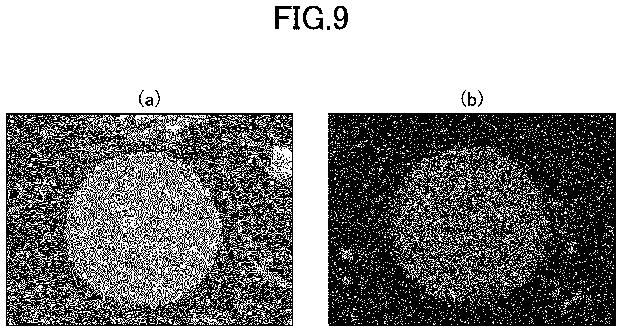

FIGS. 3 to 9 illustrate (a) cross sections of the spherical particles obtained in the respective examples and illustrate (b) distributions of aluminum contained in the respective cross-sections.

For example, FIG. 3 illustrates (a) a cross section of a spherical particle obtained in Sample 1 and illustrates (b) a distribution of the aluminum contained in the cross section. Further, FIG. 4 illustrates (a) a cross section of the spherical particle obtained in Sample 2 and illustrates (b) a distribution of the aluminum contained in the cross section. The same applies for subsequent figures.

It is to be noted that the distribution of iron contained in the cross section was in a form such that the distribution of aluminum was inverted.

It is evident from FIGS. 3 to 9 that the particles in all of Samples 1 to 7 are impregnated with aluminum along the entirety of the surface of the particles.

Next, energy dispersive X-ray (EDX) analysis was performed on the cross section obtained in each sample, to evaluation the concentrations of aluminum and iron contained throughout the entire cross section of the particle.

The analysis results obtained in each sample are summarized in Table 4 below.

**[TABLE 4]**

| Sample | Iron concentration of entirety [mass%] | Aluminum concentration of entirety [mass%] |
|---|---|---|
| 1 | 51.9 | 48.3 |
| 2 | 56.6 | 43.8 |
| 3 | 58.2 | 39.4 |
| 4 | 62.5 | 37.0 |
| 5 | 67.3 | 33.0 |
| 6 | 67.1 | 32.4 |
| 7 | 75.9 | 22.3 |

The results illustrated that in each sample, the amount of aluminum contained in the particles was approximately equal to the amount of the aluminum contained in the mixed particles.

The present application claims priority under Japanese Patent Application No. 2020-202260 filed on December 4, 2020, with the Japanese Patent Office, and the entire contents of Japanese Patent Application No. 2020-202260 are incorporated herein by reference.

### DESCRIPTION OF THE REFERENCE NUMERALS

- 352: Treatment-target particle
- 354: Aluminum source
- 358: Sintering inhibitor
- 365: Gap

## Claims

1. A method for producing aluminum-containing particles, the method comprising:
mixing together treatment-target particles, an aluminum source, an activating agent, and a plurality of sintering inhibitors, thereby obtaining mixed particles, the treatment-target particles containing a heavy metal with a relative density of 4 or more and the activating agent containing a halide;
heating the mixed particles to perform calorizing treatment on the treatment-target particles using gaps formed by the plurality of sintering inhibitors, thereby obtaining a treated mixture containing aluminum-impregnated particles, the gaps being between adjacent sintering inhibitors of the plurality of sintering inhibitors; and
removing the plurality of sintering inhibitors from the treated mixture, thereby recovering the aluminum-impregnated particles.

2. The method according to claim 1, wherein
a reaction vessel is to be filled with the mixed particles, and
a filling rate by the sintering inhibitors with respect to a volume of the reaction vessel is in a range of 50% to 80%.

3. The method according to claim 1 or 2, wherein the sintering inhibitors have at least one shape selected from the group consisting of a spherical shape, a triangular pyramid shape, a triangular prism shape, a tetrahedral shape, a conical shape, and a cylindrical shape.

4. The method according to any one of claims 1 to 3, wherein the sintering inhibitors include alumina, kaolin, silicon oxide, or any combination thereof.

5. The method according to any one of claims 1 to 4, wherein a maximum particle size of the treatment-target particles is 0.29 times or less an average particle size of the sintering inhibitors.

6. The method according to any one of claims 1 to 5, wherein an average particle size of the aluminum source is 0.29 times or less an average particle size of the sintering inhibitors.

7. The method according to any one of claims 1 to 6, wherein a particle size of the treatment-target particles is in a range of 10 µm to 600 µm.

8. The method according to any one of claims 1 to 7, wherein an average particle size of the sintering inhibitors is in a range of 500 µm to 5,000 µm.

9. The method according to any one of claims 1 to 8, wherein the heavy metal includes at least one element selected from the group consisting of iron, chromium, nickel, molybdenum, bismuth, tungsten, cobalt, zirconium, manganese, and copper.
